# EUROPEAN PATENT SPECIFICATION

(11) **EP 3 508 799 B1**
(45) Date of publication and mention of the grant of the patent: **10.05.2023**
(21) Application number: 16915082.8
(22) Date of filing: 30.08.2016
(51) Int. Cl.: F24H 1/18, F24D 19/10, G05D 23/19, H02J 3/14

(54) **HOT WATER SUPPLY CONTROL SYSTEM, SERVER, HOT WATER SUPPLY CONTROL METHOD AND PROGRAM**
SYSTEM ZUR STEUERUNG DER WARMWASSERVERSORGUNG, SERVER, VERFAHREN ZUR STEUERUNG DER WARMWASSERVERSORGUNG UND PROGRAMM
SYSTÈME DE COMMANDE D'ALIMENTATION EN EAU CHAUDE, SERVEUR, PROCÉDÉ DE COMMANDE D'ALIMENTATION EN EAU CHAUDE ET PROGRAMME

(43) Date of publication of application: 10.07.2019
(73) Proprietor: Mitsubishi Electric Corporation, Chiyoda-ku Tokyo 100-8310 (JP)
(72) Inventor: MINEZAWA, Satoshi, Tokyo 100-8310 (JP); TODA, Akihiro, Tokyo 100-8310 (JP); AKAGI, Satoshi, Tokyo 100-8310 (JP); ARAI, Takashi, Tokyo 100-8310 (JP)
(74) Representative: Studio Torta S.p.A.
(86) International application number: PCT/JP2016/075362
(87) International publication number: WO 2018/042521

(56) References cited:
- JP-A- 2012 225 601
- JP-A- 2014 114 965
- JP-A- 2016 023 814
- JP-A- 2016 023 814
- JP-A- 2016 156 532
- US-A1- 2012 232 706
- US-A1- 2016 216 007

## Description

### Technical Field

The present disclosure relates to a hot-water supply control system, a server, a hot-water supply control method and a program.

### Background Art

A hot-water storage-type water heater equipped with a hot-water storage tank is well-known. This hot-water storage-type water heater stores pre-heated water in a hot-water storage tank and, when heated water is to be supplied, supplies the pre-heated water. A water heater of this type usually performs a water-heating operation during a late-night time period during which an electricity billing rate is inexpensive.

For example, Patent Literature 1 discloses a hot-water storage-type water heater that performs a water-heating operation during a late-night time period. Also, in order to prevent run-out of hot water, during a time period other than the late-night time period, the water heater performs a water-heating operation when an amount of hot water stored in a hot-water storage tank falls below a reference value. Moreover, Patent Literatures 2, 3, and 4 disclose other hot-water storage-type water heaters.

### Citation List

### Patent Literature

Patent Literature 1: Unexamined Japanese Patent Application Kokai Publication No. 2012-225601
Patent Literature 2: US Patent Application No. 2016-216007
Patent Literature 3: Japanese Patent Application No. 2016-023814
Patent Literature 4: US Patent Application No. 2012-232706

### Summary of Invention

### Technical Problem

In a case in which the water heater in Patent Literature 1 is a plurality of water heaters, there is a risk of the water heaters performing a water-heating operation in a specific time period at the same time. In such a case, there is a risk of peak power (maximum power used in power-consuming household) increasing due to a high power consumption that occurs when the water-heating operation is performed in the specific time period.

Even in a case in which the water heater of Patent Literature 1 is only a single unit, there is a risk of peak power increasing due to the water heater performing a water-heating operation in a time period during which there is a high power consumption consumed by electrical appliances other than the water heater. When peak power is high, problems arise as described below.

In a multi-unit housing complex such as a condominium complex, company-owned housing, and an apartment complex that is under a collective power reception contract, an electricity billing rate is determined by peak power of the entirety of the multi-unit housing complex. Therefore, the higher the peak power, the more expensive the electricity billing rate. Therefore, when the peak power is high, the electricity billing rate is also high. Not only for the multi-unit housing complex but even for a standalone house, as peak power increases the breaker capacity must also be increased, and thus the electricity billing rate increases.

Also, when high-peak power arises, high-capacity power generation equipment and power-receiving equipment must be secured by power suppliers, power-consuming households, and so on. This is problematic because costs increase due to investment in equipment and the utilization ratio of the equipment drops, for example.

Therefore, there is a demand for reducing the peak power that arises due to a water-heating operation of the water heater and achieving a leveling of load.

In consideration of the aforementioned circumstances, an objective of the present disclosure is to reduce the peak power that arises due to the water-heating operation and to achieve the leveling of load.

### Solution to Problem

In order to achieve the aforementioned objective, a hot-water supply control system is provided according to claim 1.

### Advantageous Effects of Invention

According to the present disclosure, when the power consumption consumed by the electrical appliances including the water-heating means is high, the water-heating threshold is set such that water heating is unlikely to be triggered. Therefore, the peak power that arises due to the water-heating operation can be decreased, and thus the leveling of load can be achieved.

### Brief Description of Drawings

FIG. 1 is a block diagram illustrating a configuration of a hot-water supply control system according to Embodiment 1;
FIG. 2 is a block diagram illustrating a functional configuration of a server of the hot-water supply control system according to Embodiment 1;
FIG. 3 is a block diagram illustrating a functional configuration of a water heater of the hot-water supply control system according to Embodiment 1;
FIG. 4 is a flowchart illustrating an example of water-heating threshold setting processing of the hot-water supply control system according to Embodiment 1;
FIG. 5 is a block diagram illustrating a configuration of a hot-water supply control system according to Embodiment 2;
FIG. 6 is a block diagram illustrating a functional configuration of a server of the hot-water supply control system according to Embodiment 2;
FIG. 7 is a flowchart illustrating an example of water-heating threshold setting processing of the hot-water supply control system according to Embodiment 2;
FIG. 8 is a block diagram illustrating a functional configuration of a water heater that is a hot-water supply control system according to Embodiment 3; and
FIG. 9 is a diagram illustrating an example of a control state notification screen that is displayed on a display of a water heater according to a Modified Embodiment.

### Description of Embodiments

### Embodiment 1

A hot-water supply control system 1 according to Embodiment 1 of the present disclosure is described next with reference to the drawings. The present embodiment is an embodiment in which a single server 10 controls a water-heating threshold of a single water heater 50.

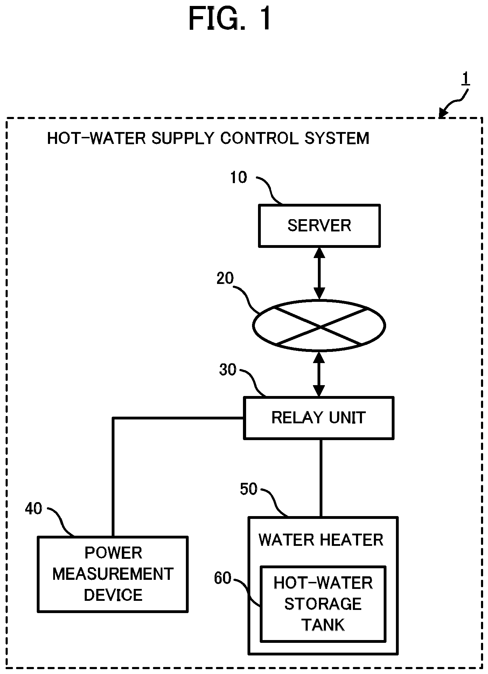

The hot-water supply control system 1, as illustrated in FIG. 1, includes a hot-water storage-type water heater 50 equipped with a hot-water storage tank 60, a server 10 that notifies the water heater 50 of a water-heating threshold, a power measurement device 40 that measures a power consumption, and a relay unit 30 that relays communications between the server 10, the power measurement device 40, and the water heater 50.

In addition to the hot-water storage tank 60, the water heater 50 includes, for example, a compressor, a heat exchanger, an expansion valve, an air blower, a temperature sensor, and a control board. The compressor, the heat exchanger, and the expansion valve form a refrigeration cycle circuit for circulation of a refrigerant. The refrigeration cycle circuit is also termed as "refrigerant circuit".

The water heater 50 uses the cooling cycle circuit to heat up municipal tap water supplied from a water-supply port and stores the heated water into the hot-water storage tank 60. In the description provided below, this operation is referred to as water heating. The water heater 50 performs water heating when an amount of hot water in the hot-water storage tank 60 falls below a water-heating threshold. When the water heater 50 supplies hot water, the water heater 50 supplies the hot water stored in the hot-water storage tank 60 to a hot-water supply terminal of, for example, a bathtub or a shower. The water-heating threshold is a hot-water amount that serves as criterion for determining whether to perform water heating.

The water heater 50 and the relay unit 30 are installed, for example, in a standalone house or a dwelling unit of a multi-unit housing complex. The power measurement device 40 is installed in vicinity of, for example, a power distribution board or power outlet in the standalone house, the dwelling unit, or the like. The server 10 is installed, for example, in the standalone house, dwelling unit, or the like.

The water heater 50 and the power measurement device 40 are communicably connected with the relay unit 30 wirelessly or via a wired cable. The relay unit 30 is communicably connected with the server 10 via a network 20. The network 20 is a local area network (LAN) or a wide area network (WAN). In a case in which the network 20 is a WAN, the relay unit 30 communicates via a broadband router.

The power measurement device 40 includes a smart meter that is provided with, for example, a function for measuring a power consumption and a communication function for transmitting measurement data. The power measurement device 40 regularly measures an instantaneous value of the power consumption of electrical appliances including the water heater 50 and regularly transmits the measurement data to the relay unit 30. The power measurement device 40 may measure the power consumption of each of the electrical appliances including the water heater 50 and set a combined value of the power consumption of the electrical appliances as the measurement data, or the power measurement device 40 may directly measure the power consumption of the entirety of the standalone house or dwelling unit and set the obtained measurement value as the measurement data. Examples of the electrical appliances include air conditioners and illumination devices.

The relay unit 30 regularly transmits the measurement data received from the power measurement device 40 to the server 10 via the network 20. Via the network 20 and the relay unit 30, the server 10 notifies the water heater 50 of the water-heating threshold. The relay unit 30 is a device that is provided with a gateway function. The relay device 30 relays communications between the server 10, the power measurement device 40, and the water heater 50.

Items such as the configuration and functions of the server 10 of the hot-water supply control system 1 are described next.

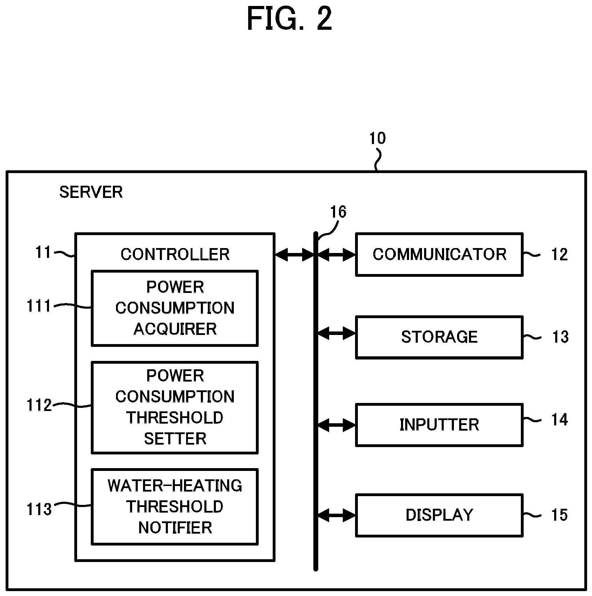

As illustrated in FIG. 2, the server 10 includes a controller 11 that controls operation of the server 10, a communicator 12 that performs communication with other devices, a storage 13 that stores various types of data, an inputter 14 that receives user-performed operations, data inputs, and the like, and a display 15 that displays an operation screen.

The controller 11 includes, for example, a central processing unit (CPU). The controller 11 is connected via a bus 16 to the communicator 12, the storage 13, the inputter 14, and the display 15. The controller 11 executes various types of processing in accordance with programs (including various types of programs described further below) stored in the storage 13.

The communicator 12 communicates with the relay unit 30. Via the relay unit 30, the communicator 12 notifies the water heater 50 of the water-heating threshold. The communicator 12 may be wire-communicably connected via a cable or may be wireless-communicably connected via an antenna.

The storage 13 includes, for example, a random-access memory (RAM) and a read-only memory (ROM). The storage 13 stores various types of programs such as a water-heating threshold notification program for notifying about a water-heating threshold, a power consumption threshold setting program for setting a power consumption threshold, and also programs used for various controls, and stores various types of data such as transmission/reception data and input data.

The inputter 14 includes a keyboard, a touch panel, an operation button, and the like. The inputter 14 receives user-performed operations, data inputs, and the like.

Examples of the display 15 include liquid crystal displays (LCD), plasma display panels (PDP), and electroluminescence (EL) displays. The display 15 displays an operation screen in accordance with a user-performed operation and displays various types of data such as the measurement data acquired via the relay unit 30 and a water-heating threshold to which the water heater 50 is set.

Next, a functional configuration of the controller 11 is described. The controller 11 functions as a power consumption acquirer 111 that acquires measurement data of power consumption from the power measurement device 40, a power consumption threshold setter 112 that sets a power consumption threshold, and a water-heating threshold notifier 113 that notifies the water heater 50 of a water-heating threshold. The power consumption threshold is a power consumption that serves as a determination criterion for determining the water-heating threshold.

The power consumption acquirer 111 acquires measurement data of the power consumption measured by the power measurement device 40. More specifically, the power measurement device 40 transmits the measurement data of the power consumption to the relay unit 30. Then, the relay unit 30 transmits the received measurement data to the server 10 via the network 20. The power consumption acquirer 111 acquires the measurement data of the power consumption by receiving the measurement data via the communicator 12.

The power consumption threshold setter 112 sets, as the power consumption threshold, an average value of the measurement data of instantaneous values of the power consumption measurements taken over a fixed time period (two week period, for example) in the past.

When the measurement data of the power consumption acquired by the power consumption acquirer 111 indicates a first power consumption that is greater than the power consumption threshold, the water-heating threshold notifier 113 notifies the water heater 50 of the water-heating threshold as being a first value. When the measurement data of the power consumption acquired by the power consumption acquirer 111 indicates a second power consumption that is less than the power consumption threshold, the water-heating threshold notifier 113 notifies the water heater 50 of the water-heating threshold as being a second value that is greater than the first value. In a case in which the measurement data of the power consumption indicates a power consumption that is the same as the power consumption threshold, the water-heating threshold notifier 113 may notify the water heater 50 of the water-heating threshold as being the first value or may notify the water heater 50 of the water-heating threshold as being the second value.

The foregoing is a description of the items such as the configuration and functions of the server 10 of the hot-water supply control system 1. Next, items such as the configuration and functions of the water heater 50 of the hot-water supply control system 1 are described.

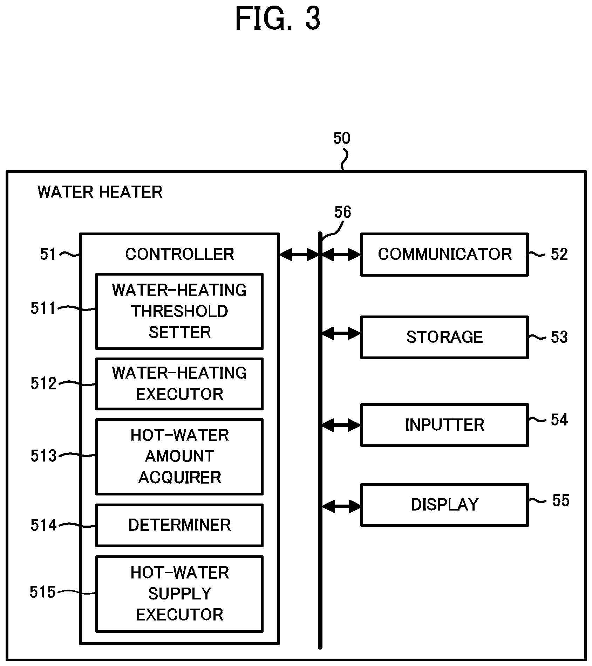

As illustrated in FIG. 3, the water heater 50 includes a controller 51 that controls the operation of the water heater 50, a communicator 52 that performs communication with other devices, a storage 53 that stores various types of data, an inputter 54 that receives user-performed operations, data inputs, and the like, and a display 55 that displays an operation screen.

The controller 51 includes, for example, a CPU. The controller 51 is connected via a bus 56 to the communicator 52, the storage 53, the inputter 54, and the display 55. The controller 51 executes various types of processing in accordance with programs (including various types of programs described further below) stored in the storage 53.

The communicator 52 communicates with the relay unit 30. The communicator 52 may be wire-communicably connected via a cable or may be wireless-communicably connected via an antenna.

The storage 53 includes, for example, RAM and ROM. The storage 53 stores various types of programs such as a water-heating threshold setting program for setting a water-heating threshold that are used for various controls, and stores various types of data such as transmission/reception data and input data.

The inputter 54 includes a touch panel, an operation button, and the like. The inputter 54 receives user-performed operations, data inputs, and the like.

Examples of the display 55 include LCDs, PDPs, and EL displays. The display 55 displays an operation screen in accordance with input data or a user-performed operation.

Next, a functional configuration of the controller 51 is described. The controller 51 functions as a water-heating threshold setter 511 that sets a water-heating threshold, a water-heating executor 512 that executes water-heating, a hot-water amount acquirer 513 that acquires an amount of hot water stored in the hot-water storage tank 60, a determiner 514 that determines whether to execute water-heating, and a hot-water supply executor 515 that supplies hot water stored in the hot-water storage tank 60 to the hot-water supply terminal of, for example, the bathtub or the shower.

The water-heating threshold setter 511 receives a notification of a water-heating threshold by the server 10 and sets the water heater 50 to the water-heating threshold.

When the determiner 514 determines that the hot-water amount is below the water-heating threshold, the water-heating executor 512 executes water-heating. Since the user does not necessarily use a hot-water amount equivalent to the capacity of the hot-water storage tank 60, performing a water-heating operation until the hot-water storage tank 60 is full of hot water is wasteful. Therefore, an amount of water to be heated through execution of water heating is not a difference between the hot-water amount of the hot-water storage tank 60 and a full capacity of the hot-water storage tank 60 but rather is a difference between the hot-water amount of the hot-water storage tank 60 and a target storage hot-water amount set based on a past hot-water usage amount (average value of amount used over past two weeks, for example).

The hot-water amount acquirer 513 acquires an amount of hot water stored in the hot-water storage tank 60. The hot-water amount acquirer 513, for example, compares, (i) a measurement temperature of temperature sensors installed on a side surface of the hot-water storage tank 60 in a longitudinal direction with (ii) a reference temperature, and then acquires a hot-water amount based on a position of a temperature sensor where the measurement temperature is greater than or equal to the reference temperature.

The determiner 514 determines whether the hot-water amount acquired by the hot-water amount acquirer 513 is below a water-heating threshold to which the water heater 50 is set.

The hot-water supply executor 515 supplies, based on a user operation from the inputter 54, hot water stored in the hot-water storage tank 60 to the hot-water supply terminal of, for example, the bathtub or the shower.

The description provided thus far is for the items such as the configuration and functions of each device in the hot-water supply control system 1. For the purpose of understanding the overall operations of the hot-water supply control system 1, next a description is provided for water-heating threshold setting processing that is carried out through cooperation between the server 10 and the water heater 50.

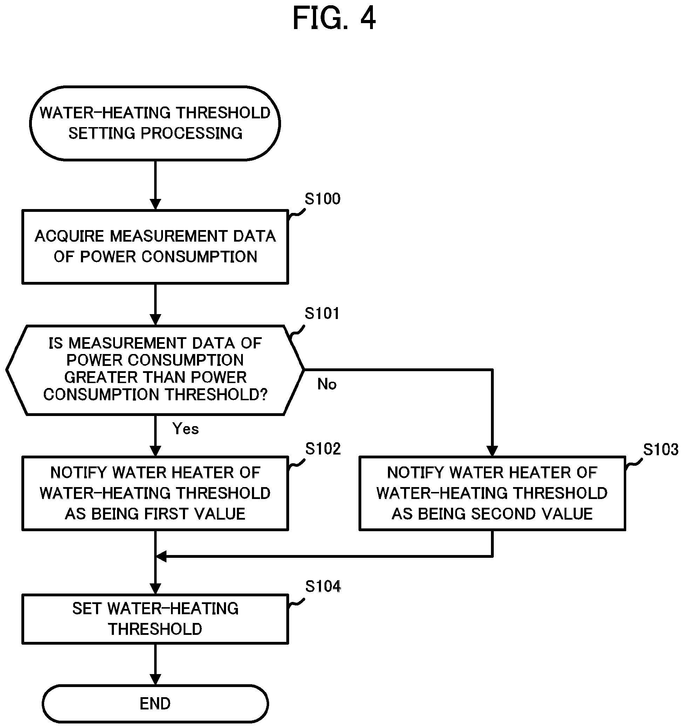

Next, the water-heating threshold setting processing is described with reference to the flowchart of FIG. 4. This processing is carried out through regular execution of the water-heating threshold notification program by the server 10 and execution, in response to the execution of the water-heating threshold notification program, of the water-heating threshold setting program by the water heater 50.

First, the power consumption acquirer 111 of the server 10 acquires measurement data of a power consumption from the power measurement device 40 (step S100). The water-heating threshold notifier 113 of the server 10 determines whether or not the measurement data of the power consumption acquired by the power consumption acquirer 111 is greater than the power consumption threshold set by the power consumption threshold setter 112 (step S101).

When the water-heating threshold notifier 113 of the server 10 determines that the measurement data of the power consumption is greater than the power consumption threshold (YES in step S101), the water-heating threshold notifier 113 notifies the water heater 50 of the water-heating threshold as being a first value (step S102). Conversely, when the water-heating threshold notifier 113 of the server 10 determines that the measurement data of the power consumption is less than the power consumption threshold (NO in step S101), the water-heating threshold notifier 113 notifies the water heater 50 of the water-heating threshold as being a second value that is greater than the first value (step S103). When the water-heating threshold notifier 113 determines that the measurement data of the power consumption is the same as the power consumption threshold, the water-heating threshold notifier 113 notifies the water heater 50 of the water-heating threshold as either being the first value or the second value depending on the set configuration as described above.

The water-heating threshold setter 511 of the water heater 50 sets the water heater 50 to the water-heating threshold that was notified by the water-heating threshold notifier 113 of the server 10 (step S104).

In the hot-water supply control system 1 according to the present embodiment, when the power consumption consumed by the electrical appliances including the water heater 50 is greater than the power consumption threshold, the water-heating threshold notifier 113 of the server 10 sets the water-heating threshold to a value that is smaller in comparison to when the consumed power consumption is less than the power consumption threshold value. Since the water heater 50 performs water heating when the hot-water amount of the hot-water storage tank 60 falls below the water-heating threshold, as long as the water-heating threshold is set to a low value, water-heating is unlikely to be triggered.

In this case, as water heating by the water heater 50 is unlikely to be triggered when the power consumption consumed by the electrical appliances including the water heater 50 is high, the power consumption that arises due to a water-heating operation during the time period of peak power consumption is suppressed. As a result, the peak power can be reduced, and thus the leveling of load can be achieved.

In the hot-water supply control system 1 according to the present embodiment, the power consumption threshold setter 112 of the server 10 sets, as the power consumption threshold, an average value of the measurement data of instantaneous values of the power consumption taken over a fixed time period in the past. The power consumption of the electrical appliances including the water heater 50 differs greatly depending on the user and the peak power also depending on the usage pattern of the user. Regarding this point, the power consumption threshold is data reflecting the usage pattern of the user.

Therefore, the hot-water supply control system 1 according to the present embodiment is capable of accurately reducing the peak power as the power consumption threshold is set in accordance with the usage pattern of the user.

### Embodiment 2

Next, a hot-water supply control system 2 according to Embodiment 2 of the present disclosure is described in detail with reference to the drawings.

The present embodiment is different from that in Embodiment 1 in that in the present embodiment a single server 70 provides overall control of water-heating thresholds of water heaters 50-1, 50-2, ...50-N. In the hot-water supply control system 2 according to the present embodiment, components that are in common with those of the hot-water supply control system 1 according to Embodiment 1 are assigned the same reference signs.

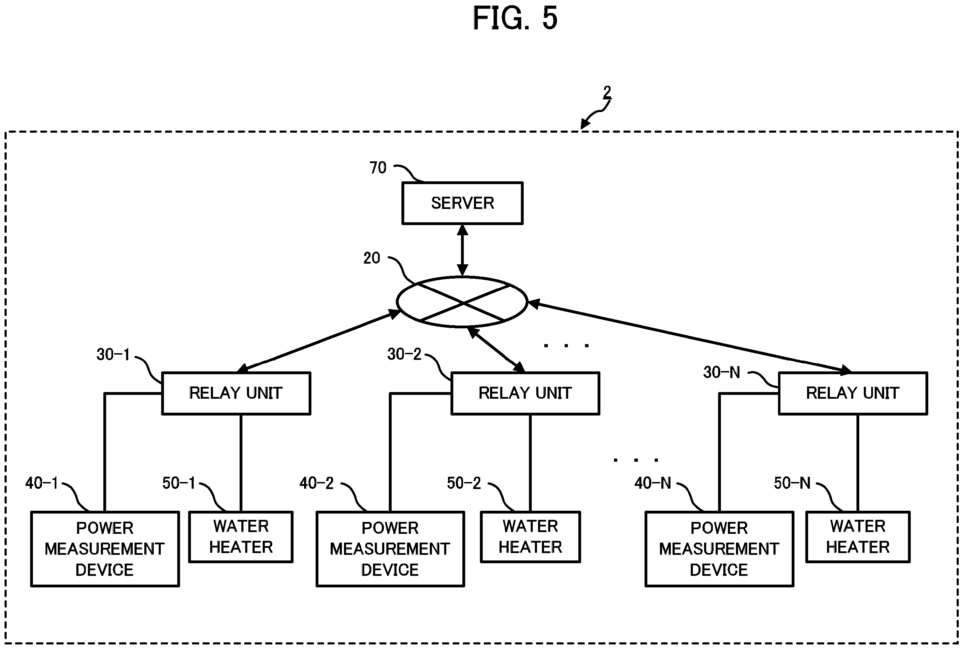

The hot-water supply control system 2, as illustrated in FIG. 5, includes relay units 30-1, 30-2, ...30-N, power measurement devices 40-1, 40-2, .. .40-N, water heaters 50-1, 50-2, ...50-N, and the server 70 that notifies the water heaters 50-1, 50-2, ...50-N of the water-heating thresholds.

One of the relay units 30-1, 30-2, .. .30-N and one of the water heaters 50-1, 50-2, ...50-N are installed in each dwelling unit of the multi-unit housing complex including N units. One of the power measurement devices 40-1, 40-2, ...40-N is installed in vicinity of, for example, the power distribution board or the power source outlet in each dwelling unit.

With this type of installation, the server 70 provides overall control of the water-heating thresholds of the water heaters 50-1, 50-2, ...50-N installed in the dwelling units of the multi-unit housing complex. The server 70 is installed at, for example, the multi-housing unit complex or an operation center located away from the multi-housing unit complex.

Each of the relay units 30-1, 30-2, ...30-N has a configuration similar to that of the relay unit 30 in Embodiment 1. Each of the power measurement devices 40-1, 40-2, .. .40-N has a configuration similar to that of the power measurement device 40 in Embodiment 1. Each of the water heaters 50-1, 50-2, ...50-N has a configuration similar to that of the water heater 50 in Embodiment 1.

However, in the present embodiment, the server 70 communicates with the relay units 30-1, 30-2, ... 30-N. Therefore, each of therelay units 30-1, 30-2, ... 30-N assigns identification information to enable the server 70 to identify the respective relay units and performs communication with the server 70.

The identification information may be device identification information for identifying at least one of the relay units 30-1, 30-2, ...30-N, the power measurement devices 40-1, 40-2, .. .40-N, or the water heaters 50-1, 50-2, ...50-N, or the identification information may be installation location identification information for specifying an installation location such as a room number of a condominium. The water heaters 50-1, 50-2, ...50-N all have the same specifications and have the same rated power consumption.

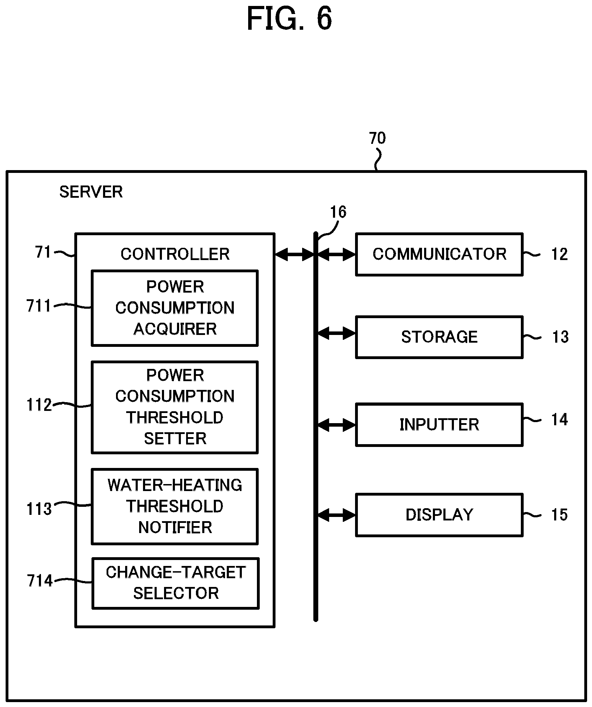

As illustrated in FIG. 6, the server 70 has substantially the same configuration as the server 10 in Embodiment 1. However, the server 70 differs from the server 10 in that the functional configuration of the controller 71 of the server 70 includes that of a change-target selector 714 in addition to that of the controller 11 of the server 10. Also, a power consumption acquirer 711 of the server 70 is different from the power consumption acquirer 111 of the server 10 in Embodiment 1 in that the power consumption acquirer 711 acquires, via the relay units 30-1, 30-2, ...30-N, not only measurement data of the power consumption from the power measurement devices 40-1, 40-2, ...40-N but also a hot-water amount from the water heaters 50-1, 50-2, ...50-N.

The change-target selector 714 selects, from among the water heaters 50-1, 50-2, ...50-N, a water heater as a target whose water-heating threshold is to be changed. First, the change-target selector 714 determines, based on the measurement data of the power consumption received from the power measurement devices 40-1, 40-2, ...40-N, a quantity of water heaters as the target whose water-heating threshold is to be changed.

Specifically, the change-target selector 714 adds up the measurement data of the instantaneous values of the power consumption taken at a same clock time received from the power measurement devices 40-1, 40-2, ...40-N to calculate a total power consumption. The change-target selector 714 calculates, as a total power consumption reference value, an average value of the total power consumption for two weeks in the past. Then, the change-target selector 714 calculates | total power consumption - total power consumption reference value | / (rated power consumption of the water heater 50-1) and determines, based on a value obtained by rounding down the calculated value to the nearest whole number, a quantity of water heaters as the target whose water-heating threshold is to be changed.

The change-target selector 714 selects, from among the water heaters 50-1, 50-2, ...50-N, water heaters equal in quantity to the determined quantity.

The change-target selector 714 selects water heaters, whose water-heating threshold is to be raised, in any one of the following orders:
1) in ascending order of a difference between an amount of hot water stored in the hot-water storage tank 60 and a water-heating threshold, the amount of hot water being greater than the water-heating threshold,
2) in ascending order of the amount of hot water stored in the hot-water storage tank 60, and
3) in ascending order of an amount of water to be heated (difference between target storage hot-water amount and amount of hot water stored in hot-water storage tank 60). The change-target selector 714 also selects water heaters, whose water-heating threshold is to be lowered, in any one of the following orders:
   1) in descending order of the difference between the amount of hot water stored in the hot-water storage tank 60 and the water-heating threshold, the amount of hot water being greater than the water-heating threshold,
   2) in descending order of the amount of hot water stored in the hot-water storage tank 60, and
   3) in descending order of the amount of water to be heated (difference between target storage hot-water amount and amount of hot water stored in hot-water storage tank 60). The target storage hot-water amount is an amount of storage water that is targeted for water heating. The water-heating executor 512 ends water heating when the amount of hot water stored in the hot-water storage tank 60 reaches the target storage hot-water amount.

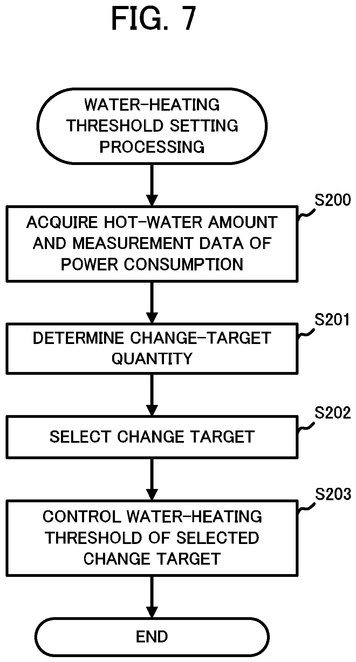

Next, the water-heating threshold setting processing that is carried out through cooperation between the water heaters 50-1, 50-2, ...50-N and the server 70 provided with the change-target selector 714 is described with reference to the flowchart of FIG. 7. This processing is carried out through regular execution of the water-heating threshold notification program by the server 70 and execution, in response to execution of the water-heating threshold notification program, of the water-heating threshold setting program by the water heaters 50-1, 50-2, ...50-N.

First, the power consumption acquirer 711 of the server 70 acquires a hot-water amount from the water heaters 50-1, 50-2, ...50-N and acquires measurement data of the instantaneous value of the power consumption from the power measurement devices 40-1, 40-2, ...40-N (step S200).

The change-target selector 714 of the server 70 calculates a total power consumption and a total power consumption reference value using the aforementioned method and calculates a change-target quantity. In doing so, the change-target selector 714 of the server 70 determines the change-target quantity (step S201).

The change-target selector 714 of the server 70 selects, from among the water heaters 50-1, 50-2, ...50-N, change targets equal in quantity to the determined change-target quantity (S202). Also, the change-target selector 714 of the server 70 selects the change targets in the aforementioned order.

The water-heating threshold notifier 113 of the server 70 performs control to raise or lower the water-heating threshold by notifying the water heaters selected as the change target among the water heaters 50-1, 50-2, ...50-N of the water-heating threshold in the selected order (S203). The control in which the water-heating threshold is raised and lowered is performed by processing similar to that in the flowchart of FIG. 4 described in Embodiment 1 whereby the water heaters selected by the water-heating threshold notifier 113 of the server 70 are notified of the water-heating threshold and the water heaters are set to the water-heating threshold.

The hot-water supply control system 2 according to the present embodiment includes water heaters 50-1, 50-2, .. .50-N and the server 70 controls, from among the water heaters 50-1, 50-2, ...50-N, a water-heating threshold of a quantity of water-heaters based on the measurement data of the power consumption received from the power measurement devices 40-1, 40-2, .. .40-N. That is, from among the water heaters 50-1, 50-2, ...50-N, water-heating threshold control is triggered only for a necessary number of units in accordance with the measurement data of the power consumption received from the power measurement devices 40-1, 40-2, ...40-N.

In this case, the possibility of the water heaters 50-1, 50-2, ...50-N being set with the same water-heating threshold or the possibility of the water-heating threshold control being triggered for the water heaters 50-1, 50-2, ...50-N at the same time is reduced, for example. Therefore, peak power can be reduced because there is a difference in, for example, the timing at which the water heaters 50-1, 50-2, ...50-N individually execute water-heating and the timing at which water-heating thresholds are controlled.

Also, in the present embodiment, since the change-target selector 714 selects the change-target quantity and change target based on the total power consumption of the entirety of the multi-housing unit complex, the peak power of the entirety of the multi-housing unit complex can be reduced. In this case, the electricity billing rate of a multi-unit housing complex that is under the collective power reception contract can be reduced thereby improving user convenience.

In the hot-water supply control system 2 in the present embodiment, the server 70 selects, from among the water heaters 50-1, 50-2, ...50-N, water heaters, whose water-heating threshold is to be raised, in any one of the following orders: (i) in ascending order of a difference between an amount of hot water and a water-heating threshold, the amount of hot water being greater than the water-heating threshold, (ii) in ascending order of the hot water amount, and (iii) in ascending order of the amount of water to be heated. Also, the server 70 selects, from among the water heaters 50-1, 50-2, ...50-N, water heaters, whose water-heating threshold is to be lowered, in any one of the following orders: (i) in descending order of the difference between the amount of hot water and the water-heating threshold, the amount of hot water being greater than the water-heating threshold, (ii) in descending order of the hot-water amount, and (iii) in descending order of the amount of water to be heated.

In such a case, water heaters in a state in which a water-heating operation is more readily triggered or water heaters whose water heating execution should be prioritized over other water heaters can prioritize execution of the water-heating operation over the other water heaters. Therefore, the more a user of a water heater needs water heating to be carried out earlier, the more readily water heating is triggered. Therefore, the convenience of the user and the efficiency of equipment operation can be improved.

### Embodiment 3

Next, a water heater that is a hot-water supply control system according to Embodiment 3 of the present disclosure is described in detail with reference to the drawings. The present embodiment is an embodiment in which a water heater itself, instead of a server, sets the water-heating threshold. Therefore components such as the server 10, the network 20, and the relay unit 30 are unnecessary. In the configuration of a water heater 80 of the present embodiment, components that are in common with those of the water heater 50 are assigned the same reference signs.

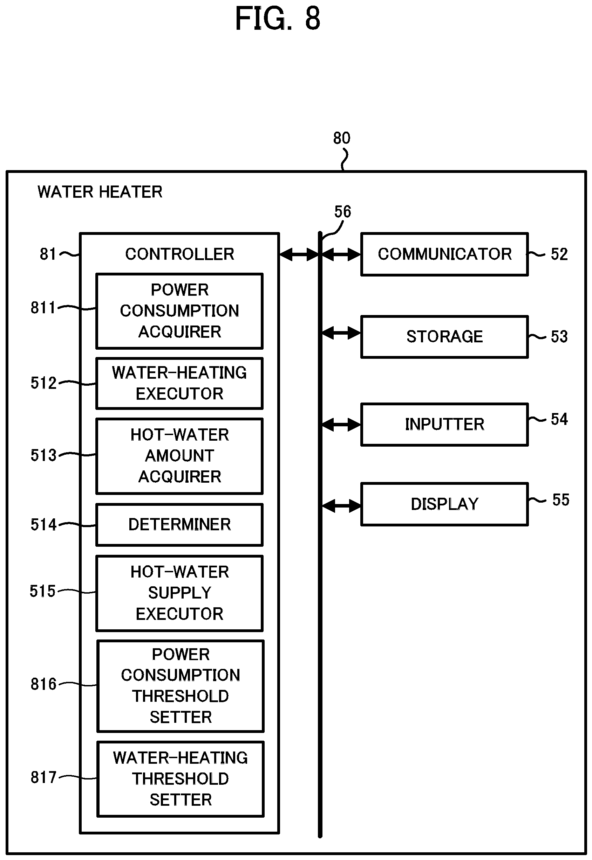

The water heater 80, as illustrated in FIG. 8, has substantially the same configuration as that of the water heater 50 described in Embodiment 1. However, the functional configuration of a controller 81 of the water heater 80 is different from the functional configuration of the controller 51 of the water heater 50. Next, the functional configuration of the controller 81 of the water heater 80 is described.

The controller 81 functions as a power consumption acquirer 811 that acquires measurement data of power consumption, the water-heating executor 512 that executes water heating, the hot-water amount acquirer 513 that acquires an amount of hot water stored in the hot-water storage tank 60, the determiner 514 that determines whether to execute water-heating, the hot-water supply executor 515 that executes the supply of hot water, a power consumption threshold setter 816 that sets a power consumption threshold, and a water-heating threshold setter 817 that sets the water-heating threshold.

The power consumption acquirer 811 receives, via the communicator 52, measurement data of the power consumption from an external device (power measurement device 40, for example) or acquires measurement data of the power consumption through measurement performed by the water heater 80 itself.

The power consumption threshold setter 816 sets the power consumption threshold based on measurement data of the power consumption taken over a fixed time period in the past. In the present embodiment, an average value of the measurement data of instantaneous values of the power consumption for two weeks in the past is set as the power consumption threshold.

When the measurement data of the power consumption acquired by the power consumption acquirer 811 indicates a first power consumption that is greater than the power consumption threshold, the water-heating threshold setter 817 sets the water-heating threshold to a first value. When the measurement data of the power consumption acquired by the power consumption acquirer 811 indicates a second power consumption that is less than the power consumption threshold, the water-heating threshold setter 817 sets the water-heating threshold to a second value that is greater than the first value. In a case in which the measurement data of the power consumption indicates a power consumption that is the same as the power consumption threshold, the water-heating threshold setter 817 may set the water-heating threshold to the first value or set the water-heating threshold to the second value.

According to the water heater 80 provided with such a configuration, the flowchart of FIG. 4, which is cooperatively executed by the server 10 and the water heater 50 in Embodiment 1, can be realized simply through the execution of the water-heating threshold setting program by the water heater 80. According to the present embodiment, the hot-water supply control system can be realized using a simple configuration since components such as the server 10, the network 20, and the relay unit 30 are unnecessary.

The present invention is not limited to the aforementioned embodiments and various modifications and applications that do not depart from the scope of the appended set of claims are possible.

### Modified Embodiments

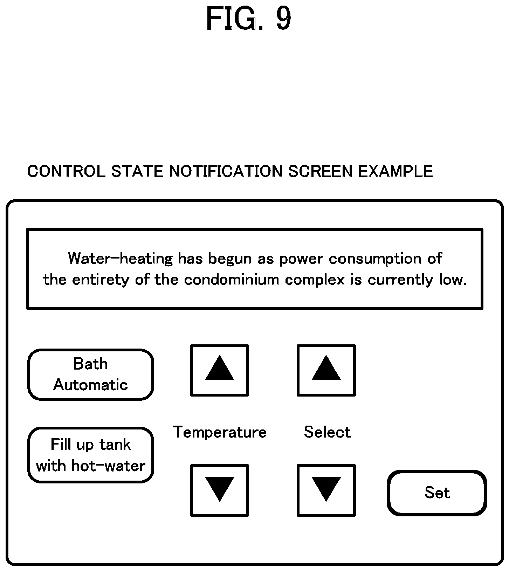

The controller 51 of the water heater 50 and the controller 81 of the water heater 80 in the aforementioned embodiments may be configured to display on the display 55 a screen notifying of a control state. For example, FIG. 9 illustrates an example of a control state notification screen that is displayed on the display 55 of the water heater 50, 80.

In this example, a screen giving notice of control reason and control detail in the form of a message, "Water-heating has begun as power consumption of the entirety of the condominium complex is currently low.". By displaying such a screen, a user can understand the control state of the water heater 50, 80 even when water-heating threshold notification processing, which is not operated manually by the user, is being executed.

In the aforementioned Embodiment 1, the relay unit 30 relays communication between the server 10 and both the power measurement device 40 and the water heater 50. However, the hot-water supply control system 1 is not limited to the configuration that includes the relay unit 30. The configuration of the hot-water supply system 1 may be configured such that the power measurement device 40 and the water heater 50 may communicate directly with the server 10 via the network 20 without the relay unit 30. Also, the relay unit 30 may be a Home Energy Management System (HEMS) controller further provided with a control function. Such kind of a modification can be similarly applied to Embodiment 2.

In the aforementioned embodiments, the power measurement devices 40, 40-1, 40-2, 40-N measure the instantaneous value of the power consumption and the water-heating threshold is set based on the measurement data containing these instantaneous values. However, the water-heating threshold may be set based on, for example, measurement data that is integrated electrical energy obtained by integrating the power consumption every 30 minutes or every hour or an average value obtained by averaging measurement data of the instantaneous values of the power consumption every 30 minutes or every hour. Reason being that, even if one of these modifications is made, the water-heating threshold is still being set based on the power consumption. Therefore, in the present disclosure the term "power consumption" is to be broadly interpreted to include " integrated electrical energy".

In the aforementioned Embodiments 1 to 3, the power consumption threshold setter 112, 816 sets the average value of the measurement data of the instantaneous values of the power consumption for two weeks in the past as the power consumption threshold. However, the power consumption threshold is not limited to such a value.

For example, the power consumption threshold may be an average value of measurement data of the power consumption for one month in the past. Also, the power consumption threshold may be a value based a maximum value of the measurement data of the power consumption for two weeks in the past. For example, the power consumption threshold may be a value that is 80% or 90% of the maximum value. Also, the power consumption threshold may be set by making a calculation only once per day taking into account that water-heating is performed only once per day as normally a bath, shower, or the like is used only once per day. Also, the power consumption threshold may be set by making a calculation only once every hour taking into account that the peak power is a one-hour unit of time.

The power consumption threshold may be determined using a method that does not depend on past measurement data. For example, the power consumption threshold may be set to a value of a maximum power defined by the power reception contract or a value of, for example, 90% of this maximum power. The power consumption threshold may be fixed to such a value. Also, the power consumption threshold may be defined based on user input data including a family composition of the inhabitants of a dwelling, the seasons, and the ages of the family members or based on for example the quantity of installed units of water heaters in the dwelling.

In the aforementioned embodiments, the water-heating threshold is controlled by only two values, the first value and the second value that is greater than the first value. However, control may be performed to switch the water-heating threshold among three or more values. The power consumption threshold may be set to include a first power consumption threshold and a second power consumption threshold that is greater than the first power consumption threshold.

For example, settings may be performed such that when the power consumption is less than the first power consumption threshold, the water-heating threshold is set to the first water-heating threshold, when the power consumption is greater than the first power consumption threshold and is less than the second power consumption threshold, the water-heating threshold is set to the second water-heating threshold that is greater than the first water-heating threshold, and when the power consumption is greater than the second power consumption threshold, the water-heating threshold is set to a third water-heating threshold that is greater than the second water-heating threshold.

However, an upper-limit value of the water-heating threshold is preferably set to no greater than the target storage hot-water amount such that wasteful water-heating is not triggered. Also, the hot-water supply control system 1, 2 may be configured to control water heating by mode settings including a full-tank mode in which water heating is forcefully performed until water is heated to the target storage hot-water amount and a stop mode in which water heating is not performed, in response to the measured power consumption in addition to performing the water-heating threshold control.

Also, in the aforementioned embodiments, the power consumption threshold is set by the power consumption threshold setter 112, 816. However, power-consumption threshold may be inputted by the user from the inputter 54 of the water heater 50 or the inputter 14 of the server 10. Also, the hot-water supply control system 1, 2 and the water heater 80 in the aforementioned embodiments, may be configured set such that (i) the power consumption threshold first calculated by power consumption threshold setter 112, 816 is used continuously and that calculation is not performed after the first calculation or (ii) the power consumption threshold is calculated regularly and the power consumption threshold is reset accordingly.

The hot-water supply control system 1, 2 in the aforementioned embodiments is configured such that the relay units 30, 30-1, 30-2, ...30-N, the power measurement devices 40, 40-1, 40-2, .. .40-N, and the water heaters 50, 50-1, 50-2, ...50-N have one-to-one correspondence. However, the present disclosure is not limited to such as configuration.

The server 10, 70, the relay units 30, 30-1, 30-2, ...30-N, the power measurement devices 40, 40-1, 40-2, .. .40-N, and the water heaters 50, 50-1, 50-2, ...50-N may be configured to have one-to-one correspondence or one-to-more-than-one correspondence. For example, the configuration may be set such that the water heaters 50-1, 50-2, ...50-N or the power measurement devices 40-1, 40-2, .. .40-N are connected to a single relay unit 30 and the single relay unit 30 relays communications between these connected components and the server 10, 70.

In Embodiment 2, the change-target selector 714 calculates | total power consumption - total power consumption reference value | / (power consumption of single unit among water heaters 50-1, 50-2, ...50-N). The value obtained by rounding down the calculated value to the nearest rounding the whole number is determined as the quantity of water heaters that are to control the water-heating threshold. However, the method for determining the quantity of the water heater that is to control the water-heating threshold is not limited to this method.

For example, it is preferable for the peak power to be greatly reduced and quickly reduced. Therefore, a coefficient less than 1 (0.8, for example) may be applied to the aforementioned calculation value to determine the quantity of water heaters whose water-heating threshold is to be raised or a coefficient greater than 1 (1.1, for example) may be applied to the aforementioned calculation value to determine the quantity of water heaters whose water-heating threshold is to be lowered among the water heaters 50-1, 50-2, ...50-N. For the latter alternative of the two alternatives given just above, the water-heating threshold for a greater quantity of water heaters is targeted for change in comparison with the former alternative, and thus a control in which the effect of decreasing the peak power is prioritized can be achieved.

In the water heaters 50, 50-1, 50-2, ...50-N, the configuration may be set such that an autonomous water-heating operation is performed in addition to performing a water-heating operation based on the water-heating threshold set by the server 10, 70.

For example, in a case in which communications with the server 10, 70 is cut off, the water-heating threshold control of the water heaters 50, 50-1, 50-2, ...50-N cannot be properly performed. Therefore, the configuration may be set such that when communications with the sever 10, 70 is cut off, the water heaters 50, 50-1, 50-2, ...50-N execute water heating in accordance with a default-set water-heating threshold or a user input.

The configuration may be set such that in a case in which communication with the server 10, 70 is cut off for one day or longer, the water-heating threshold control resumes the day after the communication state is restored. In doing so, same-time usage of the water-heating threshold control determined by the server 10, 70 and the autonomous water-heating operation of the water heaters 50, 50-1, 50-2, ...50-N can be prevented.

Alternatively, the water heaters 50, 50-1, 50-2, ...50-N may be configured such that water-heating threshold control of the water heaters 50, 50-1, 50-2, ...50-N by the server 10, 70 can be temporarily disabled by the user for the reason that there is a visitor, for example. If such a configuration is used, the convenience of the user can be guaranteed even under special circumstances.

When the water-heating threshold is set to a value that is near the capacity of the hot-water storage tank 60 of the water heaters 50, 50-1, 50-2, ...50-N, and 80 or the target storage hot-water amount, water heating gets executed each time the amount of hot water in the hot-water storage tank 60 decreases slightly due to natural heat dissipation or use of a small amount of hot-water by a user. In such cases, since water-heating is executed frequently, the energy efficiency associated with the water-heating operation decreases.

Therefore, for example, the water-heating threshold notifier 113 of the servers 10, 70 and the water-heating threshold setter 817 of the water heater 80 may be configured to limit, when the water-heating threshold is set to a value that exceeds 90% of the capacity of the hot-water storage tank 60 of the water heaters 50, 50-1, 50-2, ...50-N, and 80 or the target storage hot-water amount, a control that increases the water-heating threshold. Alternatively, the water heaters 50, 50-1, 50-2, ...50-N, and 80 may further include target storage hot-water amount control means for controlling the target storage hot-water amount of the water-heating executor 512 and the target storage hot-water amount control means may be configured to perform a control that increases the target storage hot-water amount with respect to a hot-water amount corresponding to the water-heating threshold. In doing so, an ample amount of hot-water can be maintained until the next water-heating execution is triggered, and thus frequent water-heating execution can be prevented from being triggered.

In the aforementioned embodiments, the water-heating threshold notifier 113 and the water-heating threshold setter 817 control the water-heating threshold based on the measurement data of the consumption power acquired by the power consumption acquirer 111, 711, 811. However, since the water-heating can sometimes take as long as approximately one hour to heat up the water, the control of the water-heating threshold in response to the actual peak time of the power consumption might be delayed, thereby resulting in an insufficient decrease in peak power.

Therefore, the hot-water supply control system 1, 2 may further include a power consumption predictor that predicts a power consumption in the immediate future and the water-heating threshold notifier 113 and the water-heating threshold setter 817 may control the water-heating threshold based on the predicted power consumption. In such a case, the power consumption predictor may be configured to predict a power consumption in the immediate future based on at least one parameter, examples of which include measurement data of the power consumption in a fixed time period in the past, a family composition of users, a quantity of electrical appliances of a dwelling, types of electrical appliances of the dwelling, and a schedule of usage patterns of the electrical appliances by the users.

Therefore, the power consumption acquirers 111, 711, 811 may acquire power consumption (one of predicted power consumption and measured power consumption) consumed by the electrical appliances including the water-heating means. The water-heating threshold notifier 113 and the water-heating threshold setter 817 notify of a water-heating threshold based on the power consumption acquired by the power consumption acquirer 111, 711, 811 and the water-heating threshold setter 511 may set that water-heating threshold. Therefore, in the present disclosure, the expression "a power consumption consumed by electrical appliances including water-heating means" is to be broadly interpreted to include not only "measured power consumption" but also "predicted power consumption".

Further, the hot-water supply control system 1, 2 or the water heater 80 may further include a peak time period specifier that specifies, based on measurement data of the power consumption in a fixed time period in the past, a peak time period during which peak power occurs. For example, in a case in which peak power in a 24-hour time period occurs at 13:00 to 14:00 every day in the past two weeks, the peak time period specifier specifies the 13:00 to 14:00 time period as the peak time period. The water-heating threshold notifier 113 and the water-heating threshold setter 817 may be configured to forcefully set the water-heating threshold, for a peak time period specified by the peak time period specifier, to a low value (lowest water-heating threshold, for example) regardless of the power consumption measured in that time period.

In the aforementioned embodiments, the hot-water supply control system 1, 2 and the water heater 80, as illustrated in FIG. 4, set the water-heating threshold in accordance with the acquired power consumption. However, the hot-water supply control system 1, 2 and the water heater 80 may be configured to set the water-heating threshold in accordance with a user input.

For example, the water-heating threshold notifier 113 of the server 10 may be configured to receive the water-heating threshold input via the communicator 12 or the inputter 14 by the user and to notify the water heater 50 of the received water-heating threshold. The water-heating threshold setter 511 of the water heater 50 and the water-heating threshold setter 817 of the water heater 80 may be configured to receive the water-heating threshold input via the communicator 52 or the inputter 54 by the user such that the water heater 50, 80 is set to the received water-heating threshold.

Also, the hot-water supply control system 1, 2 and the water heater 80 may be configured such that the user can set the water-heating threshold to a value in a range of "zero (0) to the capacity of the hot-water storage tank 60".

For example, in a case in which the water-heating threshold is set to "0", the hot-water amount of the hot-water storage tank 60 will not go below the set water-heating threshold. Therefore, the water heaters 50, 50-1, 50-2, ...50-N, and 80 will not execute water heating regardless of the hot-water amount of the hot-water storage tank 60. Conversely, in a case in which the water-heating threshold is set to the capacity of the hot-water storage tank 60, the hot-water amount of the hot-water storage tank 60 will not go above the set water-heating threshold. Therefore, the water heaters 50, 50-1, 50-2, ...50-N, and 80 will execute water heating regardless of the hot-water amount of the hot-water storage tank 60.

The power consumption of the water heaters 50, 50-1, 50-2, ...50-N, and 80 may be measured by the water heaters 50, 50-1, 50-2, ...50-N, and 80 and may be measured by the power measurement devices 40, 40-1, 40-2, ...40-N.

The power consumption acquirer 111, 711, 811 may be configured to acquire the power consumption of the water heaters 50, 50-1, 50-2, ...50-N, and 80 and acquire the power consumption of electrical appliances other than the water heaters 50, 50-1, 50-2, ...50-N, and 80 as separate groups ofvalues. In such a case, the power consumption threshold setter 112, 816 may be configured to set the power consumption threshold based on the total value of the power consumption of the electrical appliances other than the water heaters 50, 50-1, 50-2, ...50-N, and 80. The water-heating threshold setter 511, 817 may be configured to set the water-heating threshold to the water heaters 50, 50-1, 50-2, ...50-N, and 80 based on the total value of the power consumption of the electrical appliances other than the water heaters 50, 50-1, 50-2, ...50-N, and 80.

Applying operation programs (water-heating threshold notification program, water-heating threshold setting program, and so on) defining the operation of the hot-water supply control system 1, 2 or the water heater 80 of the present disclosure to an existing personal computer or an information terminal device enables the existing personal computer or the information terminal device to function as the hot-water supply control system 1, 2 or the water heater 80 of the present disclosure.

The above programs may be distributed by any method and, for example, may be stored and distributed on a non-transitory computer-readable recording medium such as a Compact Disc Read-Only Memory, (CD-ROM), a Digital Versatile Disc (DVD), and a memory card, or distributed via a communication network such as the Internet.

The foregoing describes some example embodiments for explanatory purposes. Although the foregoing discussion has presented specific embodiments, persons skilled in the art will recognize that changes may be made in form and detail without departing from the scope of the appended set of claims. Accordingly, the specification and drawings are to be regarded in an illustrative rather than a restrictive sense. This detailed description, therefore, is not to be taken in a limiting sense, and the scope of the invention is defined only by the included claims.

### Industrial Applicability

The present disclosure may be applied to a hot-water supply control system, a server, a hot-water supply control method and a program that control a hot-water storage-type water heater equipped with a hot-water storage tank.

### Reference Signs List

- 1, 2: Hot-water supply control system
- 10,70: Server
- 20: Network
- 30, 30-1, 30-2, 30-N: Relay unit
- 40, 40-1, 40-2, 40-N: Power measurement device
- 50, 50-1, 50-2, 50-N, 80: Water heater
- 60: Hot-water storage tank
- 11, 51, 71, 81: Controller
- 12,52: Communicator
- 13, 53: Storage
- 14,54: Inputter
- 15, 55: Display
- 16,56: Bus
- 111, 711, 811: Power consumption acquirer
- 112, 816: Power consumption threshold setter
- 113: Water-heating threshold notifier
- 511, 817: Water-heating threshold setter
- 512: Water-heating executor
- 513: Hot-water amount acquirer
- 514: Determiner
- 515: Hot-water supply executor
- 714: Change-target selector

## Claims

1. A hot-water supply control system (1), comprising:
a hot-water storage tank (60);
water-heating means for performing water heating when a hot-water amount of the hot-water storage tank (60) falls below a water-heating threshold , the water-heating threshold being a value of the hot-water amount that serves as criterion for determining whether to perform the water heating; and
power consumption acquisition means configured to acquire a power consumption consumed by a plurality of electrical appliances including the water-heating means;
**characterized by** further comprising:
water-heating threshold setting means configured to set, when the power consumption acquired by the power consumption acquisition means indicates a first power consumption that is greater than a power consumption threshold, the water-heating threshold to a first value and to set, when the power consumption acquired by the power consumption acquisition means indicates a second power consumption that is less than the power consumption threshold, the water-heating threshold to a second value that is greater than the first value.

2. The hot-water supply control system (1) according to claim 1, further comprising:
power consumption threshold setting means configured to set the power consumption threshold based on measurement data of the power consumption of a fixed time period in the past.

3. The hot-water supply control system (1) according to claim 1 or 2, further comprising:
a water heater (50) comprising the hot-water storage tank (60) and the water-heating means;
a server (10) comprising the power consumption acquisition means and the water-heating threshold setting means; and
a power measurement device (40) configured to measure the power consumption consumed by the plurality of electrical appliances including the water-heating means and to transmit to the server (10) the measurement data of the power consumption,
wherein the power consumption acquisition means are configured to acquire the measurement data of the power consumption from the power measurement device (40) and the water-heating threshold setting means are configured to set the water-heating threshold of the water heater (50) based on the measurement data of the power consumption acquired by the power consumption acquisition means.

4. The hot-water supply control system (1) according to claim 3, wherein
the water heater (50) is a plurality of water heaters (50), and
the server (10) is configured to control the water-heating threshold of water heaters (50), among the plurality of water heaters (50), the water heaters (50) being of a quantity based on the measurement data of the power consumption that is received from the power measurement device (40).

5. The hot-water supply control system (1) according to claim 4, wherein
the server (10) is configured to
select, from among the plurality of water heaters (50), at least one water heater (50) targeted for raising of the water-heating threshold, in any one of the following orders: (i) in ascending order of a difference between the hot-water amount and the water-heating threshold, the hot-water amount being greater than the water-heating threshold, (ii) in ascending order of the hot-water amount, and (iii) in ascending order of an amount of water to be heated, and
select, from among the plurality of water heaters (50), at least one water heater (50) targeted for lowering of the water-heating threshold, in any one of the following orders: (iv) in descending order of a difference between the hot-water amount and the water-heating threshold, the hot-water amount being greater than the water-heating threshold, (v) in descending order of the hot-water amount, and (vi) in descending order of an amount of water to be heated.

6. A server (10) configured to set a water-heating threshold of a water heater (50) that performs water heating when a hot-water amount falls below the water-heating threshold, the water-heating threshold being a value of the hot-water amount that serves as criterion for determining whether to perform the water heating, wherein when a power consumption consumed by a plurality of electrical appliances including the water heater (50) is a first power consumption that is greater than a power consumption threshold, the server (10) is configured to set the water-heating threshold of the water heater (50) to a first value, and when the power consumption consumed by the plurality of electrical appliances including the water heater (50) is a second power consumption that is less than the power consumption threshold, the server (10) is configured to set the water-heating threshold of the water heater (50) to a second value that is greater than the first value.

7. A hot-water supply control method, comprising:
a water-heating step of performing water heating when an amount of stored hot water falls below a water-heating threshold, the water-heating threshold being a value of the hot-water amount that serves as criterion for determining whether to perform the water heating;
**characterized by** further comprising:
a water-heating threshold setting step of setting the water-heating threshold to a first value when a power consumption consumed by a plurality of electrical appliances is a first power consumption that is greater than a power consumption threshold and setting the water-heating threshold to a second value that is greater than the first value when the power consumption consumed by the plurality of electrical appliances is a second power consumption that is less than the power consumption threshold.

8. A program for causing a computer to function as:
water-heating execution means for causing a water heater (50) to perform water heating when a hot-water amount of the water heater (50) falls below a water-heating threshold, the water-heating threshold being a value of the hot-water amount that serves as criterion for determining whether to perform the water heating; and
water-heating threshold setting means for setting, when a power consumption consumed by a plurality of electrical appliances including the water heater (50) is a first power consumption that is greater than a power consumption threshold, the water-heating threshold to a first value and for setting, when the power consumption consumed by the plurality of electrical appliances including the water heater (50) is a second power consumption that is less than the power consumption threshold, the water-heating threshold to a second value that is greater than the first value.

## Patentansprüche

1. Warmwasserzufuhr-Steuersystem (1), umfassend:
einen Warmwasser-Speichertank (60);
Wasserheizmittel, um eine Wassererwärmung auszuführen, wenn eine Warmwassermenge des Warmwasser-Speichertanks (60) unter einen Wassererwärmungsschwellenwert fällt, wobei der Wassererwärmungsschwellenwert ein Wert der Warmwassermenge ist, der als Kriterium dient, um zu bestimmen, ob die Wassererwärmung ausgeführt werden muss; und
Energieverbrauch-Erfassungsmittel, die konfiguriert sind, einen Energieverbrauch zu erfassen, der durch mehrere Elektrogeräte einschließlich der Wasserheizmittel verbraucht wird;
**dadurch gekennzeichnet, dass** es ferner umfasst:
Wassererwärmungsschwellenwert-Einstellmittel, die konfiguriert sind, dann, wenn der durch die Energieverbrauch-Erfassungsmittel erfasste Energieverbrauch einen ersten Energieverbrauch anzeigt, der größer als ein Energieverbrauchsschwellenwert ist, den Wassererwärmungsschwellenwert auf einen ersten Wert einzustellen, und dann, wenn der durch die Energieverbrauch-Erfassungsmittel erfasste Energieverbrauch einen zweiten Energieverbrauch anzeigt, der niedriger als der Energieverbrauchsschwellenwert ist, den Wassererwärmungsschwellenwert auf einen zweiten Wert einzustellen, der größer als der erste Wert ist.

2. Warmwasserzufuhr-Steuersystem (1) nach Anspruch 1, ferner umfassend:
Energieverbrauchsschwellenwert-Einstellmittel, die konfiguriert sind, den Energieverbrauchsschwellenwert auf der Basis von Messdaten des Energieverbrauchs eines festgelegten Zeitraums in der Vergangenheit einzustellen.

3. Warmwasserzufuhr-Steuersystem (1) nach Anspruch 1 oder 2, ferner umfassend:
einen Wassererwärmer (50), der den Warmwasser-Speichertank (60) und die Wasserheizmittel umfasst;
einen Server (10), der die Energieverbrauch-Erfassungsmittel und die Wassererwärmungsschwellenwert-Einstellmittel umfasst; und
eine Energiemessvorrichtung (40), die konfiguriert ist, den Energieverbrauch zu messen, der durch die mehreren Elektrogeräte einschließlich der Wasserheizmittel verbraucht wird, und die Messdaten des Energieverbrauchs an den Server (10) zu übertragen,
wobei die Energieverbrauch-Erfassungsmittel konfiguriert sind, die Messdaten des Energieverbrauchs von der Energiemessvorrichtung (40) zu erfassen, und wobei Wassererwärmungsschwellenwert-Einstellmittel konfiguriert sind, den Wassererwärmungsschwellenwert des Wassererwärmers (50) auf der Basis der Messdaten des Energieverbrauchs, der durch die Energieverbrauchs-Erfassungsmittel erfasst wird, einzustellen.

4. Warmwasserzufuhr-Steuersystem (1) nach Anspruch 3, wobei der Wassererwärmer (50) mehrere Wassererwärmer (50) sind, und
der Server (10) konfiguriert ist, den Wassererwärmungsschwellenwert von Wassererwärmern (50) unter den mehreren Wassererwärmern (50) zu steuern, wobei die Anzahl der Wassererwärmer (50) auf den Messdaten des Energieverbrauchs basiert, die von der Energiemessvorrichtung (40) erhalten werden.

5. Warmwasserzufuhr-Steuersystem (1) nach Anspruch 4, wobei der Server (10) konfiguriert ist,
aus den mehreren Wassererwärmern (50) wenigstens einen Wassererwärmer (50) auszuwählen, der dazu bestimmt ist, den Wassererwärmungsschwellenwert zu erhöhen, in einer der folgenden Reihenfolgen: (i) in aufsteigender Reihenfolge einer Differenz zwischen der Warmwassermenge und dem Wassererwärmungsschwellenwert, wobei die Warmwassermenge größer als der Wassererwärmungsschwellenwert ist, (ii) in aufsteigender Reihenfolge der Warmwassermenge, und (iii) in aufsteigender Reihenfolge einer Wassermenge, die erwärmt werden soll, und
aus den mehreren Wassererwärmern (50) wenigstens einen Wassererwärmer (50) auszuwählen, der dazu bestimmt ist, um den Wassererwärmungsschwellenwert abzusenken, in einer der folgenden Reihenfolgen: (iv) in absteigender Reihenfolge einer Differenz zwischen der Warmwassermenge und dem Wassererwärmungsschwellenwert, wobei die Warmwassermenge größer als der Wassererwärmungsschwellenwert ist, (v) in absteigender Reihenfolge der Warmwassermenge, und (vi) in absteigender Reihenfolge einer Wassermenge, die erwärmt werden soll.

6. Server (10), der konfiguriert ist, einen Wassererwärmungsschwellenwert eines Wassererwärmers (50) einzustellen, der Wassererwärmung ausführt, wenn eine Warmwassermenge unter den Wassererwärmungsschwellenwert fällt, wobei der Wassererwärmungsschwellenwert ein Wert der Warmwassermenge ist, der als Kriterium dient, um zu bestimmen, ob die Wassererwärmung ausgeführt werden soll, wobei dann, wenn ein Energieverbrauch, der durch mehrere Elektrogeräte einschließlich des Wassererwärmers (50) verbraucht wird, ein erster Energieverbrauch ist, der größer als ein Energieverbrauchsschwellenwert ist, der Server (10) konfiguriert ist, den Wassererwärmungsschwellenwert des Wassererwärmers (50) auf einen ersten Wert einzustellen, und dann, wenn der Energieverbrauch, der durch die mehreren Elektrogeräte einschließlich des Wassererwärmers (50) verbraucht wird, ein zweiter Energieverbrauch ist, der niedriger als der Energieverbrauchsschwellenwert ist, der Server (10) konfiguriert ist, den Wassererwärmungsschwellenwert des Wassererwärmers (50) auf einen zweiten Wert einzustellen, der größer als der erste Wert ist.

7. Warmwasserzufuhr-Steuerverfahren, umfassend:
einen Wassererwärmungsschritt zum Ausführen einer Wassererwärmung, wenn eine Menge an gespeichertem Warmwasser unter einen Wassererwärmungsschwellenwert fällt, wobei der Wassererwärmungsschwellenwert ein Wert der Warmwassermenge ist, der als Kriterium dient, um zu bestimmen, ob die Wassererwärmung ausgeführt werden soll;
**dadurch gekennzeichnet, dass** es ferner umfasst:
einen Schritt zum Einstellen des Wassererwärmungsschwellenwerts, um den Wassererwärmungsschwellenwert auf einen ersten Wert einzustellen, wenn ein Energieverbrauch, der durch mehrere Elektrogeräte verbraucht wird, ein erster Energieverbrauch ist, der größer als ein Energieverbrauchsschwellenwert ist, und um den Wassererwärmungsschwellenwert auf einen zweiten Wert einzustellen, der größer als der erste Wert ist, wenn der Energieverbrauch, der durch die mehreren Elektrogeräte verbraucht wird, ein zweiter Energieverbrauch ist, der niedriger als der Energieverbrauchsschwellenwert ist.

8. Programm, um einen Computer zu veranlassen, zu fungieren als:
Wassererwärmungs-Ausführungsmittel, um zu veranlassen, dass ein Wassererwärmer (50) Wassererwärmung ausführt, wenn eine Warmwassermenge des Wassererwärmers (50) unter einen Wassererwärmungsschwellenwert fällt, wobei der Wassererwärmungsschwellenwert ein Wert der Warmwassermenge ist, der als Kriterium dient, um zu bestimmen, ob die Wassererwärmung ausgeführt werden soll; und
Wassererwärmungsschwellenwerts-Einstellmittel, um dann, wenn ein Energieverbrauch, der durch mehrere Elektrogeräte einschließlich des Wassererwärmers (50) verbraucht wird, ein erster Energieverbrauch ist, der größer als ein Energieverbrauchsschwellenwert ist, den Wassererwärmungsschwellenwert auf einen ersten Wert einzustellen, und dann, wenn der Energieverbrauch, der durch die mehreren Elektrogeräte einschließlich des Wassererwärmers (50) verbraucht wird, ein zweiter Energieverbrauch ist, der niedriger als der Energieverbrauchsschwellenwert ist, den Wassererwärmungsschwellenwert auf einen zweiten Wert einzustellen, der größer als der erste Wert ist.

## Revendications

1. Système de commande d'alimentation en eau chaude (1), comprenant :
un réservoir de stockage d'eau chaude (60) ;
des moyens de chauffage d'eau pour chauffer de l'eau lorsqu'une quantité d'eau chaude du réservoir de stockage d'eau chaude (60) tombe en dessous d'un seuil de chauffage d'eau, le seuil de chauffage d'eau étant une valeur de la quantité d'eau chaude qui sert de critère pour déterminer s'il faut chauffer de l'eau ; et
des moyens d'acquisition de consommation d'énergie configurés pour acquérir une consommation d'énergie consommée par une pluralité d'appareils électriques comportant les moyens de chauffage d'eau ;
**caractérisé en ce qu'**il comprend en outre :
des moyens de réglage de seuil de chauffage d'eau configurés pour régler le seuil de chauffage d'eau sur une première valeur lorsque la consommation d'énergie acquise par les moyens d'acquisition de consommation d'énergie indique une première consommation d'énergie qui est supérieure à un seuil de consommation d'énergie, et pour régler le seuil de chauffage d'eau sur une deuxième valeur qui est supérieure à la première valeur lorsque la consommation d'énergie acquise par les moyens d'acquisition de consommation d'énergie indique une deuxième consommation d'énergie qui est inférieure au seuil de consommation d'énergie.

2. Système de commande d'alimentation en eau chaude (1) selon la revendication 1, comprenant en outre :
des moyens de réglage de seuil de consommation d'énergie configurés pour régler le seuil de consommation d'énergie sur la base de données de mesure de la consommation d'énergie d'une période de temps fixe dans le passé.

3. Système de commande d'alimentation en eau chaude (1) selon la revendication 1 ou 2, comprenant en outre :
un chauffe-eau (50) comprenant le réservoir de stockage d'eau chaude (60) et les moyens de chauffage d'eau ;
un serveur (10) comprenant les moyens d'acquisition de consommation d'énergie et les moyens de réglage de seuil de chauffage d'eau ; et
un dispositif de mesure d'énergie (40) configuré pour mesurer la consommation d'énergie consommée par la pluralité d'appareils électriques comportant les moyens de chauffage d'eau, et pour transmettre au serveur (10) les données de mesure de la consommation d'énergie,
dans lequel les moyens d'acquisition de consommation d'énergie sont configurés pour acquérir les données de mesure de la consommation d'énergie à partir du dispositif de mesure d'énergie (40), et les moyens de réglage de seuil de chauffage d'eau sont configurés pour régler le seuil de chauffage d'eau du chauffe-eau (50) sur la base des données de mesure de la consommation d'énergie acquise par les moyens d'acquisition de consommation d'énergie.

4. Système de commande d'alimentation en eau chaude (1) selon la revendication 3, dans lequel le chauffe-eau (50) est une pluralité de chauffe-eau (50), et
le serveur (10) est configuré pour commander le seuil de chauffage d'eau des chauffe-eau (50) parmi la pluralité de chauffe-eau (50), la quantité des chauffe-eau (50) étant basée sur les données de mesure de la consommation d'énergie qui sont reçues du dispositif de mesure d'énergie (40).

5. Système de commande d'alimentation en eau chaude (1) selon la revendication 4, dans lequel le serveur (10) est configuré pour
sélectionner dans la pluralité de chauffe-eau (50) au moins un chauffe-eau (50) destiné à augmenter le seuil de chauffage d'eau dans l'un des ordres suivants : (i) par ordre croissant d'une différence entre la quantité d'eau chaude et le seuil de chauffage d'eau, la quantité d'eau chaude étant supérieure au seuil de chauffage d'eau, (ii) par ordre croissant de la quantité d'eau chaude, et (iii) par ordre croissant d'une quantité d'eau à chauffer, et
sélectionner dans la pluralité de chauffe-eau (50) au moins un chauffe-eau (50) destiné à abaisser le seuil de chauffage d'eau dans l'un des ordres suivants : (iv) par ordre décroissant d'une différence entre la quantité d'eau chaude et le seuil de chauffage d'eau, la quantité d'eau chaude étant supérieure au seuil de chauffage d'eau, (v) par ordre décroissant de la quantité d'eau chaude, et (vi) par ordre décroissant d'une quantité d'eau à chauffer.

6. Serveur (10) configuré pour régler un seuil de chauffage d'eau d'un chauffe-eau (50) qui chauffe de l'eau lorsqu'une quantité d'eau chaude tombe en dessous du seuil de chauffage d'eau, le seuil de chauffage d'eau étant une valeur de la quantité d'eau chaude qui sert de critère pour déterminer s'il faut chauffer de l'eau, dans lequel lorsqu'une consommation d'énergie consommée par une pluralité d'appareils électriques comportant le chauffe-eau (50) est une première consommation d'énergie qui est supérieure à un seuil de consommation d'énergie, le serveur (10) est configuré pour régler le seuil de chauffage d'eau du chauffe-eau (50) sur une première valeur, et lorsque la consommation d'énergie consommée par la pluralité d'appareils électriques comportant le chauffe-eau (50) est une deuxième consommation d'énergie qui est inférieure au seuil de consommation d'énergie, le serveur (10) est configuré pour régler le seuil de chauffage d'eau du chauffe-eau (50) sur une deuxième valeur qui est supérieure à la première valeur.

7. Procédé de commande d'alimentation en eau chaude, comprenant :
une étape de chauffage d'eau pour chauffer de l'eau lorsqu'une quantité d'eau chaude stockée tombe en dessous d'un seuil de chauffage d'eau, le seuil de chauffage d'eau étant une valeur de la quantité d'eau chaude qui sert de critère pour déterminer s'il faut chauffer de l'eau ;
**caractérisé en ce qu'**il comprend en outre :
une étape de réglage de seuil de chauffage d'eau pour régler le seuil de chauffage d'eau sur une première valeur lorsqu'une consommation d'énergie consommée par une pluralité d'appareils électriques est une première consommation d'énergie qui est supérieure à un seuil de consommation d'énergie, et de réglage du seuil de chauffage d'eau sur une deuxième valeur qui est supérieure à la première valeur lorsque la consommation d'énergie consommée par la pluralité d'appareils électriques est une deuxième consommation d'énergie qui est inférieure au seuil de consommation d'énergie.

8. Programme pour amener un ordinateur à fonctionner comme :
des moyens d'exécution du chauffage d'eau pour amener un chauffe-eau (50) à chauffer de l'eau lorsqu'une quantité d'eau chaude de le chauffe-eau (50) tombe en dessous d'un seuil de chauffage d'eau, le seuil de chauffage d'eau étant une valeur de la quantité d'eau chaude qui sert de critère pour déterminer s'il faut chauffer de l'eau ; et
des moyens de réglage de seuil de chauffage d'eau pour régler le seuil de chauffage d'eau sur une première valeur lorsqu'une consommation d'énergie consommée par une pluralité d'appareils électriques comportant le chauffe-eau (50) est une première consommation d'énergie qui est supérieure à un seuil de consommation d'énergie, et pour régler le seuil de chauffage d'eau sur une deuxième valeur qui est supérieure à la première valeur lorsque la consommation d'énergie consommée par la pluralité d'appareils électriques comportant le chauffe-eau (50) est une deuxième consommation d'énergie qui est inférieure au seuil de consommation d'énergie.
